Europäisches Patentamt

European Patent Office

Office européen des brevets

(19)

(11) Veröffentlichungsnummer: **0 006 178**
B1

(12)     EUROPÄISCHE PATENTSCHRIFT

(45) Veröffentlichungstag der Patentschrift:
05.08.81

(51) Int. Cl.³: **H 01 G 1/10,** H 01 L 23/28,
H 03 H 9/10

(21) Anmeldenummer: 79101767.6

(22) Anmeldetag: 05.06.79

(54) Verfahren zum Umhüllen scheibenförmiger elektrischer Bauelemente.

(30) Priorität: 13.06.78 DE 2825782

(43) Veröffentlichungstag der Anmeldung:
09.01.80 Patentblatt 80/1

(45) Bekanntmachung des Hinweises auf die Patenterteilung:
05.08.81 Patentblatt 81/31

(84) Benannte Vertragsstaaten:
FR GB NL

(56) Entgegenhaltungen:
DE-B-1 187 694

(73) Patentinhaber: DRALORIC Electronic GmbH, Am
Plärrer 27, D-8500 Nürnberg (DE)

(72) Erfinder: Jöhnk, Kurt, Frank Kugler Strasse 8,
D-6730 Neustadt 15 (DE)

# Verfahren zum Umhüllen scheibenförmiger elektrischer Bauelemente

Die Erfindung betrifft ein Verfahren zum Umhüllen scheibenförmiger Körper elektrischer Bauelemente mit zwei oder mehreren auf einer Seite des Körpers abstehenden Anschlüssen, bei dem die Körper zunächst mit einem Lösungsmittel für ein elektrisch isolierendes Umhüllungsmaterial benetzt und anschliessend mit dem elektrisch isolierenden Umhüllungsmaterial bedeckt werden.

Ein derartiges Verfahren ist aus der DE-PS 1 202 852 bekannt. Dort wird das elektrische, mit Anschlüssen versehene Bauelement zuerst in ein Lösungsmittel für ein Kunststoffpulver getaucht und die feuchte Oberfläche des Bauelementkörpers mit dem Kunststoffpulver überzogen. Anschliessend wird das Kunststoffpulver während einer Wärmebehandlung aufgeschmolzen und ausgehärtet. Bei diesem bekannten Verfahren ist die Benetzung der Anschlussdrähte zwar reduziert; sie lässt sich jedoch nicht gänzlich vermeiden. Bei einem anderen bekannten Verfahren zum Umhüllen scheibenförmiger elektrischer Bauelemente, wie elektrischer Kondensatoren, werden die Bauelemente in ein zähflüssiges Kunstharz eingetaucht, bis auch die Kante mit Umhüllmaterial bedeckt ist, von der die Anschlüsse wegstehen. Infolge der Oberflächenspannung, bzw. der Zähflüssigkeit des Kunstharzes ist es notwendig, die Bauelemente bis unter den Flüssigkeitsspiegel einzutauchen. Dadurch und durch die Adhäsionskräfte sind jedoch relativ lange Benetzungen der Anschlusselemente in der Nähe des Körpers des Bauelementes nicht zu vermeiden.

Werden derartige Bauelemente in die Durchgangslöcher gedruckter Schaltungen eingesetzt, dann kann es vorkommen, dass die Anschlussbenetzung durch das Durchgangsloch hindurchragt, so dass eine sichere Lötkontaktierung verhindert wird.

Bei dem aus dem DE-GM 7 709 932 der Anmelderin bekannten elektrischen Bauelement mit Anschlägen zur Begrenzung der Einsetztiefe seiner Steckanschlüsse ist zwar eine sichere Lötkontaktierung durch eine wulstförmige Verbreiterung der Anschlüsse gewährleistet; durch die endliche Länge des Abstandes des Wulstes zum Bauelement ist jedoch bei Kondensatoren das Hochfrequenzverhalten beeinflusst.

Die Erfindung, wie sie in den Ansprüchen gekennzeichnet ist, löst die Aufgabe, ein Verfahren zur Verfügung zu stellen, mit dem scheibenförmige elektrische Bauelemente mit auf einer Seite abstehenden Anschlüssen derart mit einer elektrisch isolierenden Umhüllung versehen werden, dass die Anschlüsse von Umhüllmaterial weitestgehend freibleiben.

Die mit der Erfindung erzielten Vorteile bestehen insbesondere darin, dass Benetzungen der Anschlüsse mit Umhüllmaterial weitestgehend vermieden werden, wobei das Verfahren sehr einfach ist und auch in der Massenfabrikation angewendet werden kann. Besonders vorteilhaft kann das erfindungsgemässe Verfahren bei dünnen elektrischen Bauelementen, wie piezoelektrischen Resonatoren oder Miniaturrechteckkondensatoren angewendet werden. Ein erheblicher Vorteil liegt bei erfindungsgemäss umhüllten Miniaturrechteckkondensatoren im Eigenresonanzverhalten, da die Eigeninduktivität durch die vermiedenen Benetzungslängen stark reduziert ist. Ein weiterer Vorteil liegt in der guten Haftung des Umhüllmaterials auf dem Körper des Bauelementes, weil die Schicht des zuerst in einem Tauchvorgang aufgetragenen oder aufgesprühten oder aufgespritzten Lösungsmittels, welches die Benetzungsgeschwindigkeit für das Umhüllmaterial wesentlich erhöht, durch den Strahl des flüssigen Umhüllmaterials grösstenteils wieder entfernt wird.

Die Erfindung wird anhand der Zeichnung ausführlich erläutert.

Es zeigen:

Fig. 1 schematisch einen Aufriss des Verfahrens zum Umhüllen eines elektrischen Bauelementes,

Fig. 2 schematisch einen Grundriss des Verfahrens gemäss Fig. 1 und

Fig. 3 einen umhüllten Kondensator mit radial abstehenden Anschlüssen.

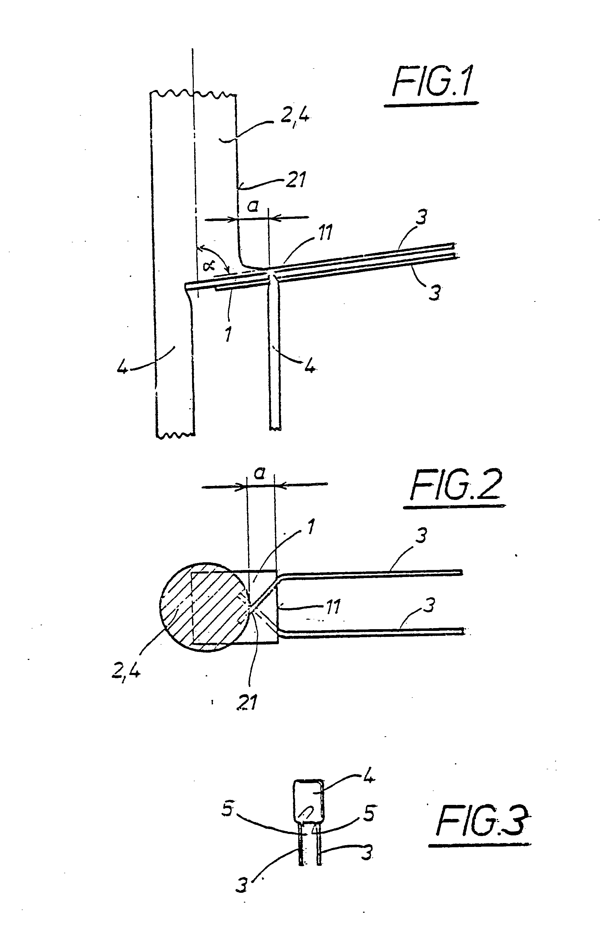

Die Figuren 1 und 2 zeigen ein elektrisches Bauelement, bestehend aus dem scheibenförmigen Körper 1 und den beiden in einer Richtung abstehenden Anschlüssen 3. Dieses Bauelement ist allseitig durch einen Tauchvorgang oder durch Aufsprühen oder Aufspritzen mit einem Lösungsmittel benetzt, welches vorzugsweise auch im Strahl 2 des flüssigen Umhüllmaterials 4 zur Einstellung der Viskosität verwendet wird.

Der Rand 21 des Strahles 2 des Umhüllmaterials 4 hat zum Rand 11 des Bauelementkörpers 1 einen definierten Abstand a. Durch das Lösungsmittel ist die Benetzungsgeschwindigkeit erhöht, so dass auch bei einem spitzen Anstellwinkel $\alpha$ zwischen dem Strahl 2 und dem Bauelement 1 mit seinen Anschlüssen 3 das Umhüllmaterial 4 zum Rand 11 vordringt. Dabei sind der Druck und die Viskosität des Flüssigkeitsstrahles 2 des Umhüllmaterials 4 so geregelt, dass das Umhüllmaterial 4 über den Rand 11 des Bauelementkörpers 1 hinunterrinnt, von dem die Anschlüsse 3 wegstehen. Durch das Umströmen des Bauelementkörpers 1 wird überschüssiges zuerst aufgetragenes Lösungsmittel weggeschwemmt und eine gute Haftung zwischen dem Bauelement 1 und dem Umhüllmaterial erreicht.

Es ist – insbesondere bei dickeren Bauelementkörpern 1 – erforderlich, das Bauelement 1 beim Umhüllvorgang um 180 Winkelgrad zu drehen, derart, dass beide Hauptflächen des scheibenförmigen Körpers 1 des Bauelementes nacheinander im Strahl 2 des flüssigen Umhüllmaterials 4 liegen.

Der Strahl des flüssigen Umhüllmaterials kann auch ein Vielfachstrahl vorzugsweise gleichen Querschnittes oder auch unterschiedlicher Querschnitte sein. Er kann auch ein Strahlvorhang sein, in dem eine Vielzahl gleicher oder unterschiedlicher Bauelemente in einem Arbeitsgang umhüllt werden.

Fig. 3 zeigt einen Miniaturrechteckkondensator mit in einem Rasterabstand nebeneinander parallel verlaufenden Anschlüssen 3, wobei die Benetzung 5 der Anschlüsse 3 mit dem Material der Umhüllung 4 verschwindend klein ist.

## Patentansprüche:

1. Verfahren zum Umhüllen scheibenförmiger Körper elektrischer Bauelemente mit zwei oder mehreren auf einer Seite des Körpers abstehenden Anschlüssen, bei dem die Körper zunächst mit einem Lösungsmittel für ein elektrisch isolierendes Umhüllungsmaterial benetzt und anschliessend mit dem elektrisch isolierenden Umhüllungsmaterial bedeckt werden, dadurch gekennzeichnet,
dass ein Strahl (2) flüssigen Umhüllungsmaterials (4) auf den Körper (1) so gerichtet wird, dass die die Anschlüsse (3) aufweisende Seite des Körpers (1) ausserhalb des Strahlquerschnittes und von dem ihr benachbarten Rand des Strahles (2) um einen vorgegebenen Abstand (a) entfernt liegt und dass der Strahl (2) unter einem vorgegebenen Winkel (α) auf den Körper (1) gerichtet wird, derart, dass das Umhüllungsmaterial (4) den Körper (1) so umströmt, dass Benetzungen der Anschlüsse (3) vermieden werden.

2. Verfahren nach Anspruch 1, dadurch gekennzeichnet, dass das Lösungsmittel in einem Tauchvorgang auf den Körper (1) des elektrischen Bauelementes aufgetragen und im anschliessenden Umhüllvorgang durch den Strahl (2) des flüssigen Umhüllmaterials (4) grösstenteils wieder entfernt wird.

3. Verfahren nach Anspruch 1, dadurch gekennzeichnet, dass das Lösungsmittel auf den Körper (1) des Bauelementes aufgesprüht oder aufgespritzt und im anschliessenden Umhüllvorgang durch den Strahl (2) des flüssigen Umhüllmaterials (4) grösstenteils wieder entfernt wird.

4. Verfahren nach einem der Ansprüche 1 bis 3, dadurch gekennzeichnet, dass der Strahl (2) des flüssigen Umhüllmaterials (4) unter einem Winkel (α) auf den Körper (1) des Bauelementes gerichtet wird, der von einem rechten Winkel abweicht, wobei die Anschlüsse (3) im spitzen Winkel (α) zum Strahl (2) des Umhüllmaterials (4) angeordnet werden.

5. Verfahren nach einem der vorhergenannten Ansprüche, dadurch gekennzeichnet, dass der Druck und die Viskosität des Strahles (2) des Umhüllmaterials (4) so geregelt sind, dass das Umhüllmaterial (4) über den Rand (11) des Bauelementkörpers (1) hinunterrinnt, von dem die Anschlüsse (3) wegstehen.

6. Verfahren nach einem der Ansprüche 1 bis 5, dadurch gekennzeichnet, dass der Körper (1) des Bauelementes beim Umhüllvorgang um 180 Winkelgrad gedreht wird, derart, dass beide Hauptflächen des scheibenförmigen Körpers (1) des Bauelementes nacheinander im Strahl (2) des flüssigen Umhüllmateriales (4) liegen.

## Revendications:

1. Procédé pour enrober des corps en forme de disque d'éléments de construction électriques présentant un ou plusieurs raccordements en saillie sur l'un des côtés du corps, procédé suivant lequel le corps est d'abord humecté avec un solvant d'une matière d'enrobage électriquement isolante, pour être ensuite recouvert par la matière d'enrobage électriquement isolante, caractérisé en ce qu'un jet (2) d'une matière d'enrobage liquide (4) est dirigé sur le corps (1) de façon que le côté du corps (1) présentant les raccordements (3) soit situé en dehors de la section transversale du jet et à une distance prédéterminée (a) du bord voisin du jet (2) et en ce que le jet (2) est dirigé sous un angle prédéterminé (α) sur le corps (1) de manière que la matière d'enrobage (4) balaie le corps (1) tout en évitant d'humecter les raccordements (3).

2. Procédé suivant la revendication 1, caractérisé en ce que le solvant est appliqué sur le corps (1) de l'élément de construction électrique par immersion pour être éliminé en majeure partie par le jet (2) de la matière d'enrobage liquide (4) lors de l'opération d'enrobage qui suit.

3. Procédé suivant la revendication 1, caractérisé en ce que le solvant est pulvérisé ou projeté sur le corps (1) de l'élément de construction pour être enlevé en majeure partie par le jet (2) de la matière d'enrobage liquide (4) lors de l'opération d'enrobage qui suit.

4. Procédé suivant l'une des revendications 1 à 3, caractérisé en ce que le jet (2) de la matière d'enrobage liquide (4) est dirigé sur le corps (1) de l'élément de construction sous un angle (α) qui n'est pas droit, les raccordements (3) étant disposés sous un angle aigu (α) par rapport au jet (2) de la matière d'enrobage (4).

5. Procédé suivant l'une des revendications 1 à 4, caractérisé en ce que la pression et la viscosité du jet (2) de la matière d'enrobage (4) sont réglées de façon que la matière d'enrobage (4) s'écoule par-dessus le bord (11) du corps (1) de l'élément de construction, duquel les raccordements (3) font saillie.

6. Procédé suivant l'une des revendications 1 à 5, caractérisé en ce que le corps (1) de l'élément de construction est tourné de 180° au cours de l'opération d'enrobage de façon que les deux surfaces principales du corps (1) en forme de disque sont balayées successivement par le jet (2) de la matière d'enrobage liquide (4).

## Claims

1. A method of encapsulating lameller bodies of electrical components which have two or more connections projecting on one side of the body, in which method the bodies are initially wetted with a solvent for an electrically insulating, encapsulating material and are subsequently covered by the electrically insulating, encapsulating material, characterised in that a jet (2) of liquid, encapsulating material (4) is directed on to the body (1) so that the side of the body (1) which has the connections (3) lies outside the cross section of the jet and is a predetermined spacing (a) away from the edge of the jet (2) which is adjacent this side; and that the jet (2) is directed on to the body (1) at a predetermined angle (α) such that the encapsulating material (4) flows round the body (1) without wetting the connections (3).

2. A method according to Claim 1 characterised in that the solvent is applied to the body (1) of the electrical component in a dipping process and is removed again for the most part by the jet (2) of liquid, encapsulating material (4) in the subsequent process of encapsulation.

3. A method according to Claim 1 characterised in that the solvent is sprayed or injected on to the body (1) of the component and is removed again for the most part by the jet (2) of the liquid, encapsulating material (4) in the subsequent process of encapsulation.

4. A method according to any one of claims 1 to 3, characterised in that the jet (2) of the liquid, encapsulating material (4) is directed on to the body (1) of the component at an angle (α) which deviates from a right angle, the connection (3) being arranged at an acute angle (α) from the jet (2) of the encapsulating material (4).

5. A method according to one of the preceding claims characterised in that the pressure and the viscosity of the jet of the encapsulating material (4) is controlled so that the encapsulating material (4) runs down over the edge (11) of the component body (1), out of which the connections (3) project.

6. A method according to claims 1 to 5 characterised in that the body (1) of the component is rotated about an angle of 180° during the encapsulation process so that both main surfaces of the lamellar body (1) of the component lie one after another in the jet (2) of the liquid, encapsulating material.

FIG.1

FIG.2

FIG.3